# EUROPEAN PATENT SPECIFICATION

(11) **EP 4 588 756 B1**
(45) Date of publication and mention of the grant of the patent: **11.03.2026**
(21) Application number: 24152232.5
(22) Date of filing: 16.01.2024
(51) Int. Cl.: B62D 6/00

(54) **METHOD FOR PROVIDING A STEERING RATIO FOR A STEER-BY-WIRE SYSTEM, METHOD FOR OPERATING A STEER-BY-WIRE SYSTEM, USE, DATA PROCESSING APPARATUS, COMPUTER PROGRAM, COMPUTER-READABLE STORAGE MEDIUM, STEER-BY-WIRE SYSTEM, AND VEHICLE**
VERFAHREN ZUM BEREITSTELLEN EINES LENKVERHÄLTNISSES FÜR EIN STEER-BY-WIRE-SYSTEM, VERFAHREN ZUM BETREIBEN EINES STEER-BY-WIRE-SYSTEMS, VERWENDUNG, DATENVERARBEITUNGSGERÄT, COMPUTERPROGRAMM, COMPUTERLESBARES SPEICHERMEDIUM
PROCÉDÉ DE FOURNITURE D'UN RAPPORT DE DIRECTION POUR UN SYSTÈME DE DIRECTION À COMMANDE ÉLECTRIQUE, PROCÉDÉ DE FONCTIONNEMENT

(43) Date of publication of application: 23.07.2025
(73) Proprietor: VOLVO CAR CORPORATION, 405 31 Göteborg (SE)
(72) Inventor: HANSSON, Anders, 40531 Göteborg (SE); DAHLGREN, David, 40531 Göteborg (SE)
(74) Representative: Maiwald GmbH

(56) References cited:
- US-A1- 2022 340 195

## Description

### TECHNICAL FIELD

The present disclosure relates to a method for providing a steering ratio for a steer-by-wire system of a vehicle.

The present disclosure is also directed to a method for operating a steer-by-wire system of a vehicle.

Additionally, the present disclosure relates to a use of first data indicative of an angular steering means speed.

Moreover, the present disclosure is directed to a data processing apparatus, a computer program, and a computer-readable storage medium
Furthermore, the present disclosure relates to a steer-by-wire system for a vehicle and a vehicle comprising a steer-by-wire system.

### BACKGROUND ART

Some modem vehicles do not use a physical, force-conveying connection between steering wheel and steered road wheels, e.g. conventional steering columns. Instead, steer-by-wire systems may be used. This means that a steering request from a driver manipulating the steering wheel is converted into an electrical signal. The electrical signal is used to actuate an electric motor to move a steering rack in order to turn the road wheels of the vehicle, e.g. to initiate driving a curve.

One advantage of steer-by-wire systems is that it is possible to adjust a steering ratio, i.e. a ratio between a steering wheel angle and a road wheel angle, depending on the vehicle speed. Thus, the steering ratio is defined as a fraction, wherein the steering wheel angle is the numerator and the road wheel angle is the denominator. The variable steering ratio may increase maneuverability at low speeds, e.g. during parking maneuvers, and may increase driving stability at high speeds, e.g. when travelling on a highway.

US 2022/340195 A1 discloses a steering control device and steering control method.

### SUMMARY

It is an objective of the present disclosure to further improve steer-by-wire systems for vehicles. In particular, a usability of such systems shall be enhanced. This means that an improved steer-by-wire system shall comply with the driver's expectation on the vehicle trajectory in an intuitive manner.

The problem is at least partially solved or alleviated by the subject matter of the independent claims of the present disclosure, wherein further examples are incorporated in the dependent claims.

According to a first aspect, there is provided a method for providing a steering ratio for a steer-by-wire system of a vehicle. The steering ratio is a ratio between a steering means angle and a road wheel angle, wherein the steering means angle is associated with a steering means configured to be operated by a driver, and the road wheel angle is associated with a road wheel controllable using the steering means. The method comprises:
- obtaining first data indicative of an angular steering means speed, and
- providing the steering ratio based on the first data.

In this context, the steering means is for example a steering wheel, a steering yoke, a joystick or any other means suitable for steering the vehicle. Moreover, a steering ratio is to be understood as the ratio between the steering means angle, e.g. steering wheel angle, and the road wheel angle. The steering ratio may be considered as an absolute value. The steering means angle is defined as a degree of angular rotation of the steering means, e.g. steering wheel, with respect to a neutral position of the steering means, e.g. steering wheel. The neutral position of the steering means is associated with the vehicle traveling along a straight trajectory. Thus, in the neutral position of the steering means the road wheel controlled by the steering means is also a neutral position, i.e. in a position associated with travelling along a straight trajectory. It is understood that the vehicle travels along a straight trajectory provided that no external lateral forces act on the vehicle, e.g. due to a bumpy or inclined road or due to strong winds. The road wheel angle is defined as a degree of angular rotation of a road wheel that is actively influenced by a steering mechanism of the vehicle. The road wheel angle is defined with respect to the neutral position of the road wheel. In particular, the road wheel angle as discussed in this disclosure does not refer to road wheels of a vehicle whose wheel angles are not actively changed by a steering mechanism of the vehicle, i.e. road wheels that just follow along. Road wheels whose degree of angular rotation is actively influenced by a steering mechanism of a passenger vehicle are usually the front wheels. However, the present disclosure is not limited to the road wheel angle of front wheels. In case of a rear wheel steering, the road wheel angle may also refer to the road wheel angle of the rear wheels of a vehicle. In case of a combined front wheel steering and rear wheel steering, the road wheel angle may refer to both the road wheel angle of the front wheels and the road wheel angle of the rear wheels. It is emphasized that the order of parameters in the above definition of the steering ratio is important. When determining the steering ratio, the steering means angle is the numerator and the road wheel angle is the denominator. Further, it is to be noted that obtaining first data indicative of an angular steering means speed is to be understood as receiving or determining said first data indicative of an angular steering means speed. The angular steering means speed is the speed of the steering means, e.g. steering wheel, with which it is being turned. In an example, the driver may turn the steering means with a higher speed in a driving situation, when the vehicle moves at a lower vehicle speed. This driving situation may be a parking maneuver on a parking lot, in a driveway, or in any other driving situation, when the vehicle is moving at lower vehicle speeds. In another example, the driver may turn the steering means with a lower speed in a driving situation, when the vehicle moves at a higher vehicle speed. This driving situation may be a lane change maneuver on a highway, or in any other driving situation, when the vehicle is moving at higher vehicle speeds. The method has the effect that the steering ratio is variable with respect to the angular steering means speed. Due to the fact that a driver of the vehicle effects the angular steering means speed, the steering behavior of the vehicle can be tailored to the expectations of the driver, thereby avoiding a surprise of the driver due to unexpected steering behavior of the vehicle. Thereby, road safety is further enhanced.

According to the disclosure, the steering ratio is an increasing function of the angular steering means speed. The steering ratio being an increasing function of the angular steering means speed means that the higher the angular steering means speed, the higher the steering ratio, i.e. the smaller the effected change in road wheel angle per unit change in steering means angle. This prevents an overshooting of the road wheel angle beyond the intended road wheel angle when the steering means is turned at high speed. This case may be particularly relevant at low vehicle speeds. Further, an undershooting of the road wheel angle below the intended road wheel angle is prevented when the steering means is turned at low speed. Such a case may be particularly relevant at high vehicle speeds. The steering ratio being a function of the angular steering means speed means that the steering ratio may be determined based on the angular steering means speed by a mathematical function.

According to an example, the steering ratio is determined using a look-up table. In this context, the steering ratio may partly or entirely be defined by a look-up table. The use of a look-up table in conjunction with simple linear interpolation may reduce computational effort in determining the steering ratio compared to the use of a mathematical function. It is noted that it is also possible to combine the alternative of the steering ratio being an increasing function of the angular steering means speed and the alternative according to which the steering ratio is determined using a look-up table.

The method according to the first aspect may be at least partly computer-implemented, and may be implemented in software or in hardware, or in software and hardware. Further, the method according to the first aspect may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the first data indicative of an angular steering means speed may be obtained from a steering means encoder. Thus, the obtained first data may be accurate and reliable.

In an example, the method further comprises providing a time derivative of third data indicative of a steering means angle and using the time derivative as first data. The third data is indicative of a steering means angle. Providing the time derivative of the third data has the effect that an angular position sensor indicating the absolute or relative position of the steering means can be used. This may technically be feasible with less effort than using a sensor that determines the steering means angle speed directly. Still the first data is accurate and reliable.

In an example, the method further comprises:
- obtaining second data indicative of a vehicle speed, and
- determining the steering ratio based on the second data.

The vehicle speed is to be understood as the travelling speed of the vehicle, i.e. the speed with which the vehicle travels along its trajectory. The travelling speed may be obtained from a satellite navigation system or from a sensor that measures the rotational speed of one or more road wheels and/or the like. In the context of vehicle speed, the rotational speed of the road wheel is to be understood as the speed of rotation of the road wheel due to or in order to create vehicle movement. Again, obtaining second data indicative of a vehicle speed is to be understood as receiving or determining second data indicative of a vehicle speed. Determining the steering ratio based on the second data is to be understood in a conjunctive sense. This means that the steering ratio may be determined under additional consideration of the vehicle speed. By taking the vehicle speed into account, it is possible to adjust the steering ratio to a given driving scenario. For instance, a small steering ratio at low vehicle speed may increase maneuverability during parking. A high steering ratio at high vehicle speed may, for instance during lane change on a highway, increase driving stability. Determining the steering ratio by a combination of angular steering means speed and vehicle speed results in a steering behavior of the vehicle that is tailored to a driving scenario and to the expectations of the driver at the same time. Additionally, this improves the comfort of the driver.

In an example, the method further comprises:
- obtaining third data indicative of a steering means angle, and
- determining the steering ratio based on the third data.

Again, obtaining third data indicative of a steering means angle is to be understood as receiving or determining third data indicative of a steering means angle. Determining the steering ratio based on the third data is to be understood in a conjunctive sense. This means that the steering ratio may be determined under additional consideration of the steering means angle. Considering the steering means angle serves the purpose of increasing handling comfort of the vehicle. For instance, if the steering means is already turned into one direction by a large degree and consequently the road wheel angle is comparatively high, chances are high that the driver would either like to increase the road wheel angle even further, e.g. for driving a sharp curve, or decrease the road wheel angle quickly, e.g. for ending a sharp curve after having mastered an apex of the curve. Setting a small steering ratio at high steering means angles allows large changes in road wheel angle upon comparatively small changes in steering means angle. This increases handling comfort for the driver because the driver only needs to turn the steering means by a comparatively small amount in order to achieve a desired change in road wheel angle.

In an example, the steering ratio is a polynomial, e.g. parabolic, function or an at least partially linear function of the angular steering means speed. The steering ratio being a polynomial function means that the steering ratio may be determined based on the angular steering means speed using a polynomial. In this context, the steering ratio may increase progressively as the steering means speed increases. This has the effect that the above-described overshooting and undershooting of the road wheel angle may be even more effectively prevented. Additionally, this enhances the comfort of the driver and the safety of the vehicle. Using a polynomial function is an accurate and reliable way to determine the steering ratio based on the angular steering means speed. Alternatively, the steering ratio may be an at least partially linear function of the steering means speed. Supporting points of the linear parts may be provided in a look-up table. In this case, a linear interpolation between the points listed in the look-up table may be conducted to determine the steering ratio to a given steering means speed. The use of a look-up table and consequential linear interpolation may enable an approximation of a mathematical function such as a polynomial function. Such approximation may require a comparatively low computational effort.

In an example, the steering ratio is an increasing function of the vehicle speed. This means that at high vehicle speeds, the road wheel angle changes by a smaller degree per unit change of the steering means angle than at lower vehicle speeds. This has the effect that the vehicle is prevented from preforming undesired sharp turns at high vehicle speeds. This increases driving stability and safety.

In an example, the steering ratio is a polynomial, e.g. parabolic, function or an at least partially linear function of the vehicle speed. The steering ratio being a polynomial function means that the steering ratio may be determined based on the vehicle speed using a polynomial. In this context, the steering ratio may increase progressively as the vehicle speed increases. This has the effect that the vehicle is effectively prevented from performing undesired sharp turns at high vehicle speeds. Also here, using a polynomial function is an accurate and reliable way to determine the steering ratio based on the vehicle speed. Alternatively, the steering ratio may be an at least partially linear function of the vehicle speed. Supporting points of the linear parts may be provided in a look-up table. In this case, a linear interpolation between the points listed in the look-up table may be conducted to determine the steering ratio to a given vehicle speed. The use of a look-up table and consequential linear interpolation may enable an approximation of a mathematical function such as a polynomial function. Such approximation may require a comparatively low computational effort.

According to a second aspect, a method for operating a steer-by-wire system of a vehicle is presented. The method comprises:
- obtaining third data indicative of a steering means angle,
- providing a steering ratio using the method of the first aspect, and
- providing a reference road wheel angle based on the third data and the steering ratio.

Obtaining third data indicative of a steering means angle is to be understood as receiving or determining third data indicative of a steering means angle. The reference road wheel angle is to be understood as the desired road wheel angle as determined by the steer-by-wire system. The desired road wheel angle may as well be called a target road wheel angle. The reference road wheel angle may be used in a closed-loop control of the road wheel angle. In such a case, the desired road wheel angle is compared to an actual road wheel angle. The difference between reference road wheel angle and actual road wheel angle is transformed into a request for a road wheel angle change. The request for a road wheel angle change is converted into an electric signal which is sent to an actuator of the steering mechanism. The actuator of the steering mechanism then adjusts the actual road wheel angle by the road wheel angle request. Altogether, the road wheel angle may be reliably controlled such that it corresponds to the reference road wheel angle. Additionally, this may be achieved in an efficient way since only necessary road wheel angle changes need to be communicated instead of a continuous signal of desired road wheel angles.

The method according to the second aspect may be at least partly computer-implemented, and may be implemented in software or in hardware, or in software and hardware. Further, the method according to the first aspect may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a use of first data indicative of an angular steering means speed for determining a steering ratio for a steer-by-wire system of a vehicle. The steering ratio is an increasing function of the angular steering means speed. This means that at least first data indicative of an angular steering means speed is taken into account when determining a steering ratio for a steer-by-wire system of a vehicle. As before, the steering ratio is a ratio between a steering means angle and a road wheel angle. It is emphasized that the order of parameters in the above definition of the steering ratio is important. When calculating the steering ratio, the steering means angle is the numerator and the road wheel angle is the denominator. The use according to the present disclosure has the effect that the steering ratio is variable with respect to the angular steering means speed. Due to the fact that a driver of the vehicle effects the angular steering means speed, the steering behavior of the vehicle can be tailored to the expectations of the driver, thereby avoiding a surprise of the driver due to unexpected steering behavior of the vehicle. Thereby, driving safety is enhanced.

According to a fourth aspect, there is provided a data processing apparatus comprising means for carrying out at least one of the methods of the present disclosure. This covers three alternatives. According to a first alternative, the data processing apparatus comprises means for carrying out the method for providing a steering ratio for a steer-by-wire system of a vehicle. According to a second alternative, the data processing apparatus comprises means for carrying out the method for operating a steer-by-wire system of a vehicle. According to a third alternative, the data processing apparatus comprises both means for carrying out the method for providing a steering ratio for a steer-by-wire system of a vehicle and means for carrying out the method for operating a steer-by-wire system of a vehicle. Thus, using such a data processing apparatus, first data indicative of an angular steering means speed is considered when determining the steering ratio for the steer-by-wire system. This has the effect that the steering ratio is variable with respect to the angular steering means speed. Due to the fact that a driver of the vehicle effects the angular steering means speed, the steering behavior of the vehicle can be tailored to the expectations of the driver, thereby avoiding a surprise of the driver due to unexpected steering behavior of the vehicle. Thereby, driving safety is enhanced.

According to a fifth aspect, there is provided a computer program comprising instructions which, when the computer program is executed by a computer, cause the computer to carry out at least one of the methods of the present disclosure. This covers three alternatives. According to a first alternative, the computer comprises instructions which cause the computer to carry out the method for providing a steering ratio for a steer-by-wire system of a vehicle. According to a second alternative, the computer comprises instructions which cause the computer to carry out the method for operating a steer-by-wire system of a vehicle. According to a third alternative, the computer comprises both instructions which cause the computer to carry out the method for providing a steering ratio for a steer-by-wire system of a vehicle and instructions which cause the computer to carry out the method for operating a steer-by-wire system of a vehicle. Thus, using such a computer program, first data indicative of an angular steering means speed is considered when determining the steering ratio for the steer-by-wire system. This has the effect that the steering ratio is variable with respect to the angular steering means speed. Due to the fact that a driver of the vehicle effects the angular steering means speed, the steering behavior of the vehicle can be tailored to the expectations of the driver, thereby avoiding a surprise of the driver due to unexpected steering behavior of the vehicle. Thereby, driving safety is enhanced.

According to a sixth aspect, there is provided a computer-readable storage medium comprising instructions which, when executed by a computer, cause the computer to carry out at least one of the methods of the present disclosure. This covers three alternatives. According to a first alternative, the computer-readable storage medium comprises instructions which cause the computer to carry out the method for providing a steering ratio for a steer-by-wire system of a vehicle. According to a second alternative, the computer-readable storage medium comprises instructions which cause the computer to carry out the method for operating a steer-by-wire system of a vehicle. According to a third alternative, the computer-readable storage medium comprises both instructions which cause the computer to carry out the method for providing a steering ratio for a steer-by-wire system of a vehicle and instructions which cause the computer to carry out the method for operating a steer-by-wire system of a vehicle. Thus, using such a computer-readable storage medium, first data indicative of an angular steering means speed is considered when determining the steering ratio for the steer-by-wire system. This has the effect that the steering ratio is variable with respect to the angular steering means speed. Due to the fact that a driver of the vehicle effects the angular steering means speed, the steering behavior of the vehicle can be tailored to the expectations of the driver, thereby avoiding a surprise of the driver due to unexpected steering behavior of the vehicle. Thereby, driving safety is enhanced.

According to a seventh aspect, there is provided a steer-by-wire system comprising a data processing apparatus according to the present disclosure. Thus, using such a steer-by-wire system, first data indicative of an angular steering means speed is considered when determining the steering ratio for the steer-by-wire system. This has the effect that the steering ratio is variable with respect to the angular steering means speed. Due to the fact that a driver of the vehicle effects the angular steering means speed, the steering behavior of the vehicle can be tailored to the expectations of the driver, thereby avoiding a surprise of the driver due to unexpected steering behavior of the vehicle. Thereby, driving safety is enhanced.

According to an eighth aspect, there is provided a vehicle comprising a steer-by-wire system according to the present disclosure. Thus, using such a vehicle, first data indicative of an angular steering means speed is considered when determining the steering ratio for the steer-by-wire system. This has the effect that the steering ratio is variable with respect to the angular steering means speed. Due to the fact that a driver of the vehicle effects the angular steering means speed, the steering behavior of the vehicle can be tailored to the expectations of the driver, thereby avoiding a surprise of the driver due to unexpected steering behavior of the vehicle. Thereby, driving safety is enhanced.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a steer-by-wire system according to the present disclosure, wherein the steer-by-wire system comprises a data processing apparatus according to the present disclosure comprising means for carrying out a method according to the present disclosure for providing a steering ratio for a steer-by-wire system of a vehicle and means for carrying out a method according to the present disclosure for operating a steer-by-wire system of a vehicle,
- Figure 2: shows a schematic representation of the input and output parameters of the method according to the present disclosure for providing a steering ratio for a steer-by-wire system of a vehicle,
- Figure 3a: shows an exemplary course of a steering ratio as a polynomial function of an angular steering means speed or of a vehicle speed,
- Figure 3b: shows an exemplary course of a steering ratio as an at least partially linear function of an angular steering means speed or of a vehicle speed, and
- Figure 4: shows a schematic representation of steps of the method according to the present disclosure for providing a steering ratio for a steer-by-wire system.

### DETAILED DESCRIPTION

The Figures are merely schematic representations and serve only to illustrate examples of the disclosure. Identical or equivalent elements are in principle provided with the same reference signs.

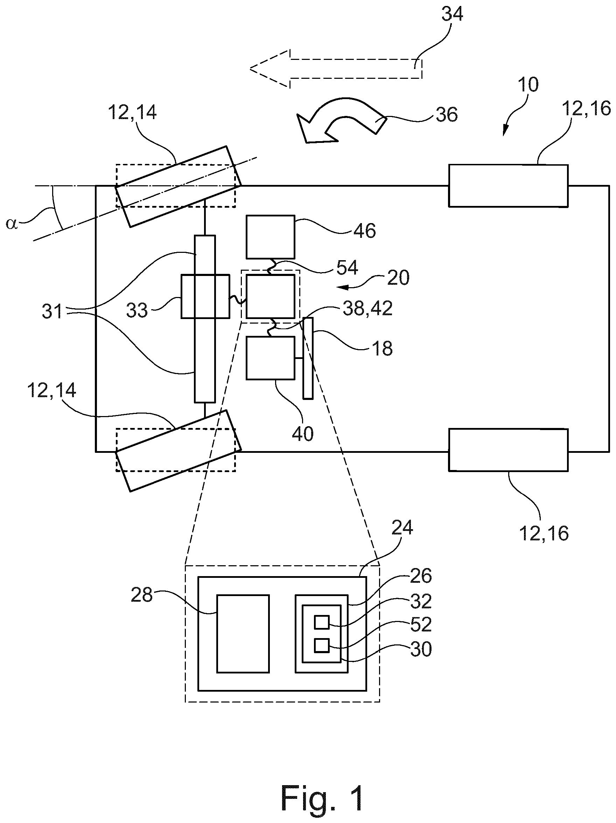

Figure 1 shows a vehicle 10.

The vehicle 10 includes four road wheels 12, wherein the four road wheels 12 comprise two front wheels 14 and two rear wheels 16.

In the present example, the front wheels 14 of the vehicle 10 are steerable. This means that the front wheels 14 can be turned around an axis substantially perpendicular to the drawing plane so that they force the vehicle 10 to drive around a curve.

In this context, an angle of the steerable front wheels 14 by which the steerable front wheel 14 are inclined with respect to a neutral orientation is called road wheel angle α. This means that the road wheel angle α is measured with respect to a neutral orientation of the steerable front wheels 14. A neutral orientation of the steerable front wheels 14 is present when the vehicle 10 drives along a straight trajectory provided that no external lateral forces act on the vehicle 10, e.g. due to a bumpy or an inclined road or due to strong winds.

It is noted that in the present example, the rear wheels 16 are not steerable. Therefore, the road wheel angle α as discussed herein only relates to the angle of the steerable front wheels 14. However, in case of a rear wheel steering, a road wheel angle of the rear wheels 16 may be taken into account additionally or alternatively to the road wheel angle α of the front wheels 14.

The vehicle 10 further comprises a steering means 18 which in the present example is a steering wheel 18. In the following, the same reference sign will be used for the steering means and the steering wheel.

A driver of the vehicle 10 uses the steering means 18 to generate a steering input to the vehicle 10.

The vehicle 10 further comprises a steer-by-wire system 20.

The steer-by-wire system 20 couples the steering means 18 and the steerable front wheels 14 such that the road wheel angle α may be adapted by manipulating the steering means 18.

More precisely, the steer-by-wire system 20 is configured to determine a road wheel angle α, more precisely a reference road wheel angle, for the steerable front wheels 14 based on a steering means angle β.

In the present example, the road wheel angle α, more precisely the reference road wheel angle, is determined by multiplying the steering means angle β and a steering ratio 22.

Thus, the steering ratio 22 is a transmission ration that acts between the road wheel angle α, more precisely the reference road wheel angle, and the steering means angle β. In this context, the steering ratio 22 is a fraction having the steering means angle β is the enumerator and the road wheel angle α as the denominator

A characteristic of the steer-by-wire system 20 is that the steering ratio 22 between a steering means angle β and a road wheel angle α is variable.

For providing said steering ratio 22, the steer-by-wire system 20 comprises a data processing apparatus 24.

The data processing apparatus 24 comprises a data storage unit 26 and a data processing unit 28.

The data storage unit 26 comprises a computer-readable storage medium 30.

On the computer-readable storage medium 30, there is provided a computer program 32.

The computer program 32 and, thus, also the computer-readable storage medium 30, comprise instructions which, when executed by the data processing unit 28, or, more generally speaking, a computer, cause the computer or the data processing unit 28 to carry out a method for providing a steering ratio 22 for the steer-by-wire system 20 of the vehicle 10

Consequently, the data storage unit 26 and the data processing unit 28 form means for providing a steering ratio 22 for the steer-by-wire system 20 of the vehicle 10.

In the present example, the computer program 32 and the computer-readable storage medium 30, also comprise instructions which, when executed by the data processing unit 28, or, more generally speaking, a computer, cause the computer or the data processing unit 28 to carry out a method for operating the steer-by-wire system 20 of the vehicle 10. Thus, the data storage unit 26 and the data processing unit 28 also form means for operating the steer-by-wire system 20 of the vehicle 10.

In the following, the method for providing a steering ratio 22 for the steer-by-wire system 20 of the vehicle 10 will be explained in detail. This method forms part of the method for operating the steer-by-wire system 20.

The steer-by-wire system 20 is configured to transform a steering input provided by the driver by manipulating the steering means 18 into an electrical signal. The electric signals is converted into a mechanical actuation of a steering rack 31 by an electric motor 33. The mechanical actuation of the steering rack 31 causes the road wheel angle α of the road wheels 12 to change. This in turn causes the vehicle 10 to drive along a curved trajectory.

In Fig. 1, a forward driving direction is indicated by a dotted straight arrow 34. Front wheels 14 in a neutral position are also drawn-in in a dotted fashion. A neutral position of the front wheels 14 causes the vehicle 10 to travel along a straight trajectory. This is also reflected by the dotted straight arrow 34 in Fig. 1. The corresponding road wheel angle is 0°.

In Fig. 1, an inclined position of the front wheels 14 is indicated with solid lines. In this position, they are rotated around an axis perpendicular to the drawing plane. Their road wheel angle α exceeds 0°. This causes the vehicle 10 to follow a curved trajectory indicated by a curved arrow 36.

Due to the definition of the steering ratio, a small steering ratio 22 causes small changes in steering means angle β to have a comparatively large effect on the road wheel angle α.

A high steering ratio 22 causes large changes in steering means angle β to have a comparatively small effect on the road wheel angle α.

When executing the method, the data processing apparatus 24 of the steer-by-wire system 20 obtains first data 38 indicative of an angular speed of the steering means 18 from a steering means encoder 40. This first data 38 gives an indication of how quickly the driver turns the steering means 18.

In an alternative, a steering means encoder 40 may deliver third data 42 indicative of an absolute or relative angular position of the steering means 18. In this case, a time derivative of the third data 42 is obtained by the data processing apparatus 24. This time derivative is used as the first data 38.

In the present example, the steering ratio 22 is determined depending on an angular steering means speed β̇.

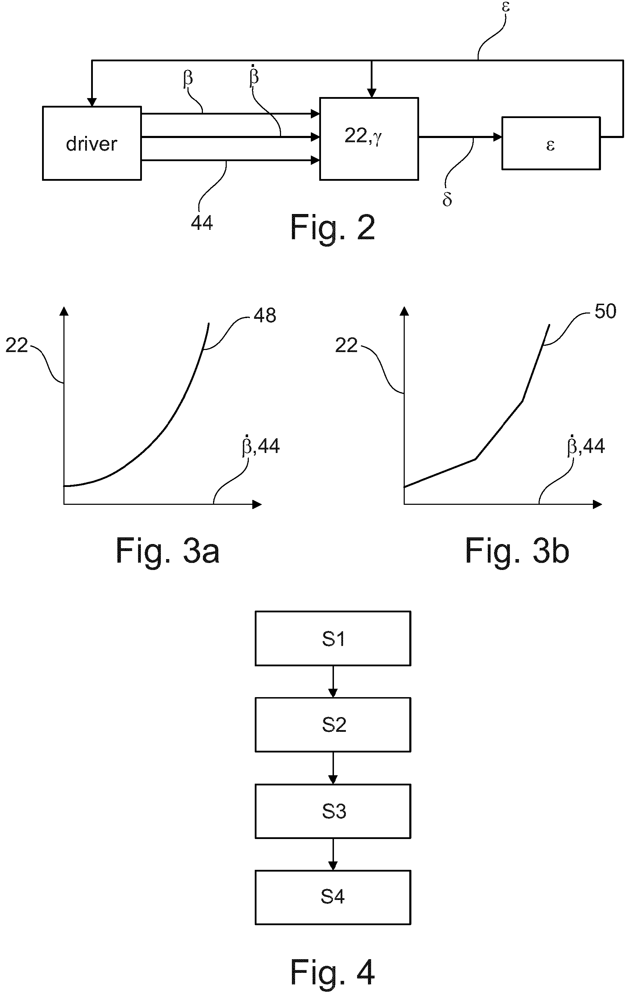

Figures 3a and 3b, show example functions 48, 50 according to which the steering ratio 22 increases with increasing steering means speed β̇. This means that the quicker the driver turns the steering means 18, the smaller the respective change in road wheel angle α. This enhances driving stability upon abrupt steering means inputs.

Additionally, the steering ratio 22 may increase with increasing vehicle speed 44. This means that the faster the vehicle 10 is travelling, the smaller the respective change in road wheel angle α. Abrupt changes in road wheel angle α may negatively affect driving stability at high vehicle speeds 44. Hence, driving stability at high vehicle speeds 44 is increased (see also Figures 3a and 3b).

The vehicle speed 44 is obtained from a vehicle speed unit 46. The vehicle speed unit 46 may gather data on the vehicle speed 44 through a sensor that measures a rotational speed of one of the road wheels 12 or from a satellite navigation system.

The steering ratio 22 may increase according to a continuously differentiable mathematical function depending on angular steering means speed β̇ and/or vehicle speed 44. In this case, the steering ratio 22 may be a polymeric, in the present example parabolic, function 48 of angular steering means speed β̇ and/or vehicle speed 44 (see Fig. 3a).

The steering ratio 22 may also increase according to a piecewise linear function 50 depending on angular steering means speed β̇ and/or vehicle speed 44. In such a case, a look-up table 52 listing the supporting points of the piecewise linear functions 50 may be provided. The dependency of the steering ratio 22 on angular steering means speed β̇ and/or vehicle speed 44 between these supporting points may be obtained by linear interpolation between the supporting points (see Fig. 3b).

It is noted that the dependency of the steering ratio 22 from the angular steering means speed β̇ and/or the vehicle speed 44 may also be governed by a combination of a continuously differentiable mathematical function and a piecewise linear function 50.

Further additionally, the steering ratio 22 may be variable depending on third data 42 indicative of a steering means angle β. For example, the steering ratio 22 may decrease with increasing steering means angle β, meaning that the higher the steering means angle β, the higher the change in road wheel angle α. This may particularly increase maneuverability of the vehicle 10 during parking.

All in all, the method for providing a steering ratio 22 for a steer-by-wire system 20 of a vehicle 10 may comprise four steps (see Fig. 4).

In a first step S1, first data 38 indicative of an angular steering means speed β̇ is obtained from the steering means encoder 40 by the data processing apparatus 24.

The driver operates the vehicle 10 by turning the steering means 18 with different angular steering means speeds β̇ that are characteristic for specific driving maneuvers.

In an example, a low angular steering means speed β̇ is characteristic for a lane change maneuver on a highway, or in any other driving situation where it is an objective of the driver to turn the steering means 18 with a low speed to turn the road wheels 12 in a slow manner.

In another example, a high angular steering means speed β̇ is characteristic for a parking maneuver on a parking lot, in a driveway, or in any other driving situation where it is an objective of the driver to turn the steering means 18 with a high speed to turn the road wheels 12 in a fast manner.

In a second step S2, second data 54 indicative of a vehicle speed 44 is obtained from the vehicle speed unit 46 by the data processing apparatus 24. Different vehicle speeds 44 occur when the driver accelerates or decelerates the vehicle 10.

In an third step S3, third data 42 indicative of a steering means angle β is obtained from the steering means encoder 40. The steering means angle β changes when the driver operates the vehicle 10 by turning the steering means 18 to reach a desired road wheel angle α for performing a driving maneuver.

In a fourth step S4, the steering ratio 22 is determined by the data processing apparatus 24 depending on the input from the previous steps.

The method for providing a steering ratio 22 for a steer-by-wire system 20 of a vehicle 10 is part of a method for operating a steer-by-wire system 20 of a vehicle 10. While the former method only determines the steering ratio 22, the latter method actually determines a reference road wheel angle γ.

The reference road wheel angle γ is determined based on the steering means angle β and the angular steering means speed β̇. Both the steering means angle β and the angular steering means speed β̇ are input parameters of the method for operating the steer-by-wire system 20.

In the present example, the vehicle speed 44 is also considered in the determination of the reference road wheel angle γ.

In the following, the method for operating the steer-by-wire system 20 of the vehicle 10 according to the present disclosure will be explained and the steps of this method will be designated by S1x.

In a first step S11, the steer-by-wire system 20 obtains third data 42 indicative of a steering means angle β.

In a second step S12, the steer-by-wire system 20 provides the steering ratio 22 using the method for providing a steering ratio 22 for a steer-by-wire system 20 of a vehicle 10 according to the present disclosure.

In a third step S13, the steer-by-wire system 20 provides the reference road wheel angle γ based on the third data 42 and the steering ratio 22.

From the reference road wheel angle γ, a request for road wheel angle change δ is determined. This is achieved by comparing an actual road wheel angle ε to the reference road wheel angle γ in a closed loop control (see Fig. 2). The difference between actual road wheel angle ε and reference road wheel angle γ is transformed into a request for a road wheel angle change δ. The request for a road wheel angle change δ is sent to the electric motor 33 that actuates the steering rack 31. The electric motor 33 adjusts the actual road wheel angle ε based on the request for a road wheel angle change δ.

The steering ratio 22 is determined based on data that originates from operations of the driver to drive the vehicle 10. First data 38 indicative of an angular steering means speed β̇, second data 54 indicative of a vehicle speed 44, and third data 42 indicative of a steering means angle β are used to determine the steering ratio 22 for the steer-by-wire system 20 of the vehicle 10. Further, the reference road wheel angle γ is provided based on the third data 42 indicative of a steering means angle β and the steering ratio 22. Further, the driver receives as a feedback the actual road wheel angle ε as a result of the driver's operations to drive the vehicle 10.

In an example, first data 38 indicative of an angular steering means speed β̇ can be replaced by a time derivative of the third data 42 indicative of a steering means angle β. In other words, different sensors can be used to obtain the first data 38.

The steering ratio 22 is formed as an increasing function of the angular steering means speed β̇. Additionally or alternatively, the steering ratio 22 is determined using a look-up table 52. Further, the steering ratio 22 can also be depicted as an increasing function of the vehicle speed 44.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: road wheel
- 14: front wheel
- 16: rear wheel
- 18: steering means, steering wheel
- 20: steer-by-wire system
- 22: steering ratio
- 24: data processing apparatus
- 26: data storage unit
- 28: data processing unit
- 30: computer-readable storage medium
- 31: steering rack
- 32: computer program
- 33: electric motor
- 34: straight arrow
- 36: curved arrow
- 38: first data
- 40: steering means encoder
- 42: third data
- 44: vehicle speed
- 46: vehicle speed unit
- 48: polynomial function
- 50: piecewise linear function
- 52: look-up table
- 54: second data

- S1: first step of method according to first aspect of the present disclosure
- S2: second step of method according to first aspect of the present disclosure
- S3: third step of method according to first aspect of the present disclosure
- S4: fourth step of method according to first aspect of the present disclosure

- S11: first step of method according to second aspect of the present disclosure
- S12: second step of method according to second aspect of the present disclosure
- S13: third step of method according to second aspect of the present disclosure

- α: road wheel angle
- β: steering means angle
- β̇: angular steering means speed
- γ: reference road wheel angle
- δ: road wheel angle change
- ε: actual road wheel angle

## Claims

1. A method for providing a steering ratio (22) for a steer-by-wire system (20) of a vehicle (10), wherein the steering ratio (22) is a ratio between a steering means angle (β) and a road wheel angle (α), wherein the steering means angle (β) is associated with a steering means (18) configured to be operated by a driver, and the road wheel angle (α) is associated with a road wheel (12) controllable using the steering means (18), the method comprising:
- obtaining first data (38) indicative of an angular steering means speed (β̇), and
- providing the steering ratio (22) based on the first data (38),
**characterized**
**in that** the steering means angle (β) is the numerator of the steering ratio (22) and the road wheel angle (α) is the denominator of the steering ratio (22), and
**in that** the steering ratio (22) is an increasing function of the angular steering means speed (β̇).

2. The method according to claim 1, further comprising providing a time derivative of third data (42) indicative of a steering means angle (β) and using the time derivative as first data (38).

3. The method according to the claim 1 or 2, further comprising:
- obtaining second data (54) indicative of a vehicle speed (44), and
- determining the steering ratio (22) based on the second data (54).

4. The method according to any one of the preceding claims, further comprising:
- obtaining third data (42) indicative of a steering means angle (β), and
- determining the steering ratio (22) based on the third data (42).

5. The method according to any one of the preceding claims, wherein the steering ratio (22) is determined using a look-up table (52).

6. The method according to any one of the preceding claims, wherein the steering ratio (22) is a polynomial function (48) or an at least partially linear function of the angular steering means speed (β̇).

7. The method according to any one of claims 3 to 6, wherein the steering ratio (22) is an increasing function of the vehicle speed (44).

8. The method according to claim 7, wherein the steering ratio (22) is a polynomial function (48) or an at least partially linear function of the vehicle speed (44).

9. A method for operating a steer-by-wire system (20) of a vehicle (10), comprising:
- obtaining third data (42) indicative of a steering means angle (β),
- providing a steering ratio (22) using the method of any one of the preceding claims, and
- providing a reference road wheel angle (γ) based on the third data (42) and the steering ratio (22).

10. A use of first data (38) indicative of an angular steering means speed (β) for determining a steering ratio (22) for a steer-by-wire system (20) of a vehicle (10), wherein the steering ratio (22) is a ratio between a steering means angle (β) and a road wheel angle (α), wherein the steering means angle (β) is the numerator and the road wheel angle (α) is the denominator, and wherein the steering ratio (22) is an increasing function of the angular steering means speed (β̇).

11. A data processing apparatus (24) comprising means for carrying out at least one of the methods of claims 1 to 9.

12. A computer program (32) comprising instructions which, when the computer program (32) is executed by a computer, cause the computer to carry out at least one of the methods of claims 1 to 9.

13. A computer-readable storage medium (30) comprising instructions which, when executed by a computer, cause the computer to carry out at least one of the methods of claims 1 to 9.

14. A steer-by-wire system (20) for a vehicle (10), comprising a data processing apparatus (24) according to claim 11.

15. A vehicle (10) comprising a steer-by-wire system (20) according to claim 14.

## Patentansprüche

1. Verfahren zum Bereitstellen eines Lenkverhältnisses (22) für ein Steer-by-Wire-System (20) eines Fahrzeugs (10), wobei das Lenkverhältnis (22) ein Verhältnis zwischen einem Lenkmittelwinkel (β) und einem Straßenradwinkel (α) ist, wobei der Lenkmittelwinkel (β) einem Lenkmittel (18) zugeordnet ist, das dazu eingerichtet ist, von einem Fahrer betätigt zu werden, und der Straßenradwinkel (α) einem Straßenrad (12) zugeordnet ist, das unter Verwendung des Lenkmittels (18) steuerbar ist, wobei das Verfahren umfasst:
- Erhalten erster Daten (38), die eine Lenkmittel-Winkelgeschwindigkeit (β̇) angeben, und
- Bereitstellen des Lenkverhältnisses (22) auf der Grundlage der ersten Daten (38),
**dadurch gekennzeichnet,**
**dass** der Lenkmittelwinkel (β) der Zähler des Lenkverhältnisses (22) ist und der Straßenradwinkel (α) der Nenner des Lenkverhältnisses (22) ist, und
**dass** das Lenkverhältnis (22) eine zunehmende Funktion der Lenkmittel-Winkelgeschwindigkeit (β) ist.

2. Verfahren nach Anspruch 1, des Weiteren umfassend das Bereitstellen einer Zeitableitung von dritten Daten (42), die einen Lenkmittelwinkel (β) angeben, und das Verwenden der Zeitableitung als erste Daten (38).

3. Verfahren nach Anspruch 1 oder 2, des Weiteren umfassend:
- Erhalten zweiter Daten (54), die eine Fahrzeuggeschwindigkeit (44) angeben
und
- Bestimmen des Lenkverhältnisses (22) auf der Grundlage der zweiten Daten (54).

4. Verfahren nach einem der vorangehenden Ansprüche, des Weiteren umfassend:
- Erhalten dritter Daten (42), die einen Lenkmittelwinkel (β) angeben, und
- Bestimmen des Lenkverhältnisses (22) auf der Grundlage der dritten Daten (42).

5. Verfahren nach einem der vorangehenden Ansprüche, wobei das Lenkverhältnis (22) unter Verwendung einer Nachschlagetabelle (52) bestimmt wird.

6. Verfahren nach einem der vorangehenden Ansprüche, wobei das Lenkverhältnis (22) eine Polynomfunktion (48) oder eine mindestens teilweise lineare Funktion der Lenkmittel-Winkelgeschwindigkeit (β) ist.

7. Verfahren nach einem der Ansprüche 3 bis 6, wobei das Lenkverhältnis (22) eine zunehmende Funktion der Fahrzeuggeschwindigkeit (44) ist.

8. Verfahren nach Anspruch 7, wobei das Lenkverhältnis (22) eine Polynomfunktion (48) oder eine mindestens teilweise lineare Funktion der Fahrzeuggeschwindigkeit (44) ist.

9. Verfahren zum Betreiben eines Steer-by-Wire-Systems (20) eines Fahrzeugs (10), umfassend:
- Erhalten dritter Daten (42), die einen Lenkmittelwinkel (β) angeben,
- Bereitstellen eines Lenkverhältnisses (22) unter Verwendung des Verfahrens nach einem der vorangehenden Ansprüche und
- Bereitstellen eines Referenz-Straßenradwinkels (γ) auf der Grundlage der dritten Daten (42) und des Lenkverhältnisses (22).

10. Verwenden erster Daten (38), die eine Lenkmittel-Winkelgeschwindigkeit (β) angeben, zum Bestimmen eines Lenkverhältnisses (22) für ein Steer-by-Wire-System (20) eines Fahrzeugs (10), wobei das Lenkverhältnis (22) ein Verhältnis zwischen einem Lenkmittelwinkel (β) und einem Straßenradwinkel (α) ist, wobei der Lenkmittelwinkel (β) der Zähler ist und der Straßenradwinkel (α) der Nenner ist, und wobei das Lenkverhältnis (22) eine zunehmende Funktion der Lenkmittel-Winkelgeschwindigkeit (β) ist.

11. Datenverarbeitungsvorrichtung (24), umfassend ein Mittel zum Ausführen mindestens eines der Verfahren nach den Ansprüchen 1 bis 9.

12. Computerprogramm (32), umfassend Instruktionen, die, wenn das Computerprogramm (32) durch einen Computer ausgeführt wird, den Computer veranlassen, mindestens eines der Verfahren nach den Ansprüchen 1 bis 9 auszuführen.

13. Computerlesbares Speichermedium (30), umfassend Instruktionen, die, wenn sie durch einen Computer ausgeführt werden, den Computer veranlassen, mindestens eines der Verfahren nach den Ansprüchen 1 bis 9 auszuführen.

14. Steer-by-Wire-System (20) für ein Fahrzeug (10), umfassend eine Datenverarbeitungsvorrichtung (24) nach Anspruch 11.

15. Fahrzeug (10), umfassend ein Steer-by-Wire-System (20) nach Anspruch 14.

## Revendications

1. Procédé de fourniture d'un rapport de direction (22) pour un système de direction par câbles (20) d'un véhicule (10), dans lequel le rapport de direction (22) est un rapport entre un angle de moyen de direction (β) et un angle de roue de route (α), dans lequel l'angle de moyen de direction (β) est associé à un moyen de direction (18) configuré pour être manœuvré par un conducteur, et l'angle de roue de route (α) est associé à une roue de route (12) pouvant être commandée à l'aide du moyen de direction (18), le procédé comprenant de :
- obtenir des premières données (38) indicatives d'une vitesse angulaire de moyen de direction (β), et
- fournir le rapport de direction (22) sur la base des premières données (38),
**caractérisé en ce**
**que** l'angle de moyen de direction (β) est le numérateur du rapport de direction (22) et l'angle de roue de route (α) est le dénominateur du rapport de direction (22), et
**que** le rapport de direction (22) est une fonction croissante de la vitesse angulaire de moyen de direction (β).

2. Procédé selon la revendication 1, comprenant en outre de fournir une dérivée par rapport au temps de troisièmes données (42) indicatives d'un angle de moyen de direction (β) et d'utiliser la dérivée par rapport au temps comme premières données (38).

3. Procédé selon la revendication 1 ou 2, comprenant en outre de :
- obtenir des deuxièmes données (54) indicatives d'une vitesse de véhicule (44),
et
- déterminer le rapport de direction (22) sur la base des deuxièmes données (54).

4. Procédé selon l'une quelconque des revendications précédentes, comprenant en outre de :
- obtenir des troisièmes données (42) indicatives d'un angle de moyen de direction (β), et
- déterminer le rapport de direction (22) sur la base des troisièmes données (42).

5. Procédé selon l'une quelconque des revendications précédentes, dans lequel le rapport de direction (22) est déterminé à l'aide d'une table de consultation (52).

6. Procédé selon l'une quelconque des revendications précédentes, dans lequel le rapport de direction (22) est une fonction polynomiale (48) ou une fonction au moins partiellement linéaire de la vitesse angulaire de moyen de direction (β).

7. Procédé selon l'une quelconque des revendications 3 à 6, dans lequel le rapport de direction (22) est une fonction croissante de la vitesse de véhicule (44).

8. Procédé selon la revendication 7, dans lequel le rapport de direction (22) est une fonction polynomiale (48) ou une fonction au moins partiellement linéaire de la vitesse de véhicule (44).

9. Procédé pour faire fonctionner un système de direction par câbles (20) d'un véhicule (10), comprenant de :
- obtenir des troisièmes données (42) indicatives d'un angle de moyen de direction (β),
- fournir un rapport de direction (22) à l'aide du procédé de l'une quelconque des revendications précédentes, et
- fournir un angle de roue de route de référence (γ) sur la base des troisièmes données (42) et du rapport de direction (22).

10. Utilisation de premières données (38) indicatives d'une vitesse angulaire de moyen de direction (β) pour déterminer un rapport de direction (22) pour un système de direction par câbles (20) d'un véhicule (10), dans laquelle le rapport de direction (22) est un rapport entre un angle de moyen de direction (β) et un angle de roue de route (α), dans laquelle l'angle de moyen de direction (β) est le numérateur et l'angle de roue de route (α) est le dénominateur, et dans laquelle le rapport de direction (22) est une fonction croissante de la vitesse angulaire de moyen de direction (β).

11. Appareil de traitement de données (24) comprenant un moyen pour mettre en œuvre au moins un des procédés selon les revendications 1 à 9.

12. Programme informatique (32) comprenant des instructions qui, lorsque le programme informatique (32) est exécuté par un ordinateur, amènent l'ordinateur à mettre en œuvre au moins un des procédés selon les revendications 1 à 9.

13. Support de stockage lisible par ordinateur (30) comprenant des instructions qui, lorsqu'elles sont exécutées par un ordinateur, amènent l'ordinateur à mettre en œuvre au moins un des procédés selon les revendications 1 à 9.

14. Système de direction par câbles (20) pour un véhicule (10), comprenant un appareil de traitement de données (24) selon la revendication 11.

15. Véhicule (10) comprenant un système de direction par câbles (20) selon la revendication 14.
